# EUROPÄISCHE PATENTSCHRIFT

(11) **EP 2 168 761 B1**
(45) Veröffentlichungstag und Bekanntmachung des Hinweises auf die Patenterteilung: **22.04.2015**
(21) Anmeldenummer: 09011039.6
(22) Anmeldetag: 28.08.2009
(51) Int. Cl.: B30B 11/00, B30B 11/08, G01N 22/04

(54) **Verfahren zur Qualitätsüberwachung von pulverförmigem Pressmaterial und eine Rundläuferpresse zur Durchführung des Verfahrens**
Method for monitoring the quality of powdery pressing material and a rotary press for carrying out the method
Procédé de surveillance de la qualité de matériaux de compression en poudre et une presse rotative destinée à l'exécution du procédé

(30) Priorität: 25.09.2008 DE 102008049015
(43) Veröffentlichungstag der Anmeldung: 31.03.2010
(73) Patentinhaber: Fette Compacting GmbH, 21493 Schwarzenbek (DE)
(72) Erfinder: Herrmann, Rainer, 20253 Hamburg (DE); Schlemm, Udo, 20259 Hamburg (DE); Schmidt, Ingo, 21493 Schwarzenbek (DE); Arndt, Ulrich, 21481 Lauenburg (DE)
(74) Vertreter: Hauck Patentanwaltspartnerschaft mbB

(56) Entgegenhaltungen:
- EP-A1- 1 669 755
- EP-A2- 1 568 480
- EP-A2- 1 844 924
- EP-B1- 0 908 718
- DE-U1-202007 018 481

## Beschreibung

Die Erfindung bezieht sich auf ein Verfahren zur Qualitätsüberwachung von pulverförmigem Pressmaterial für eine Rundläuferpresse nach Anspruch 1 sowie auf eine Rundläuferpresse nach Anspruch 6.

Rundläuferpressen dienen bekanntlich zur Produktion von tablettenförmigen Presslingen, insbesondere für die Pharmaindustrie. Rundläuferpressen haben einen weitgehend gleichen Aufbau. Ein drehend angetriebener Rotor enthält Ober- und Unterstempel sowie Matrizen, in die mit Hilfe einer Füllvorrichtung permanent pulverförmiges Pressmaterial eingefüllt wird, das mit Hilfe der Pressstempel komprimiert wird. Die Pressstempel werden mit Hilfe von Druckrollen betätigt. Außerhalb der Pressstationen werden die Pressstempel von Steuerkurven geführt. Nach dem Verpressen werden die Presslinge mit Hilfe der Unterstempel ausgeworfen und von einem Abstreifer entfernt.

Insbesondere im Pharmabereich müssen die Presslinge eine Reihe von Qualitätskriterien erfüllen, wie zum Beispiel Gewicht, Kraft, Bruchfestigkeit, Höhe, Wirkstoffgehalt, Wirkstofffreigabe, Zerfall, Friabilität, Porosität, Oberfläche, Feuchtegehalt, usw. Es ist bekannt, eine Qualitätsüberwachung durch Stichprobenentnahme während der Produktion durchzuführen. Entsprechen die getesteten Presslinge nicht den gewünschten Bedingungen, werden entsprechende Stellparameter in der Presse geändert. Stellparameter sind zum Beispiel die Drehzahl des Rotors, die Drehzahl der Fülleinrichtung, die Pulverdosierung in den Matrizen, die Presskraft über die Druckrollen usw.

Es ist auch eine Online-Prozesskontrolle bekannt geworden. Ein Prüfgerät steht unmittelbar neben der Tablettenpresse. Stichproben werden automatisch aus dem Tablettenstrom entnommen und dem Prüfgerät zugeführt. Darin werden Presslinge vereinzelt und gemessen. Eine Änderung mindestens eines Stellparameters der unteren Presse erfolgt über eine Rechnerschnittstelle vom Prüfgerät zur Maschinensteuerung. Bekanntlich sind derartigen Rundläufertablettenpressen ein Maschinenrechner sowie ein Bedienrechner zugeordnet, die die Steuerung bzw. Regelung des Pressbetriebs vornehmen.

Es ist auch bekannt, während der Produktion die Presskraft, der ein Pressling unterworfen ist, unmittelbar zu messen. Die Presskraft ist bekanntlich ein Maß für das Tablettengewicht und die Tablettenhärte. Hat die Presskraft nicht das erforderliche Maß, wird zum Beispiel entweder die zugeführte Pulvermenge pro Matrize und/oder die Einstellung der Druckrollen geändert.

Schließlich ist auch, aus der Dokument EP 1 568 480 bekannt, zum Beispiel den Wirkstoff in Presslingen mit Hilfe einer Nah-Infrarotspektroskopie (NIR) oder einer Laser-Fluoreszenzspektroskopie (LIF) zu messen. Eine derartige Messung kann innerhalb des Gehäuses der Tablettenpresse stattfinden, entweder nach dem Befüllen der Matrizen oder während des Ausstoßens der Presslinge aus den Matrizen.

Der Erfindung liegt die Aufgabe zu Grunde, ein Verfahren zur Qualitätsüberwachung von Pressmaterial in einer Rundläuferpresse anzugeben, mit dem schnell auf Produktänderungen reagiert und die Verlustquote an Presslingen mit unzureichenden Qualitätsmerkmalen minimiert werden kann.

Diese Aufgabe wird durch die Merkmale des Anspruchs 1 gelöst.

Bei dem erfindungsgemäßen Verfahren wird dem Zuführkanal ein Mikrowellenresonator mit einer Auswerteeinheit zugeordnet, die die Feuchte und/oder die Dichte und/oder die Größe des Granulats des Pressmaterials misst. Mindestens eine Messgröße des Mikrowellenresonators wird zur Änderung einer Stellgröße der Rundläuferpresse verwendet. Die Messung wird mit einem Mikrowellen resonator in einem Bypasskanal parallel zum Zuführkanal außhalb eines Gehäuses für die Rundläuferpresse durchgeführt.

Mit Hilfe des erfindungsgemäßen Verfahrens erfolgt eine Prozessoptimierung, da das zu überprüfende Pulver bereits im Zuführbereich gemessen wird, bevor es in die Matrizen gefüllt wird. Es wird hinsichtlich seiner Feuchte und/oder Dichte und/oder Granulatgröße gemessen. Dadurch kann schneller auf Produktänderungen reagiert und die Verlustquote an Tabletten mit falschen Qualitätsmerkmalen reduziert werden. Bekanntlich können der Rundläuferpresse zugeführte Pulverchargen hinsichtlich Feuchte, Dichte und Granulatgröße unterschiedlich ausfallen, sodass, bevor es zur Pressung von weiteren Tabletten kommt, entsprechende Maßnahmen, etwa in Form von Regelungsaktivitäten oder eines Stopps der Presse, durchgeführt werden können.

Feuchte, Dichte und Granulatgröße des Presspulvers haben Einfluss auf das Fließverhalten des Pulvers sowie auf Qualitätskriterien der Presslinge, wie Gewicht, Härte, Zerfall, Friabilität, Porosität und Feuchte. Mit den Messergebnissen können beim erfindungsgemäßen Verfahren in Maschinenrechner und/oder in Bedienrechner statistische Größen wie zum Beispiel Mittelwerte und/oder Standardabweichung berechnet und/oder angezeigt und/oder protokolliert werden. Beim Verlassen vorgegebener Grenzbereiche des Pulverzustandes wird die Produktion der Rundläuferpresse durch den Maschinenrechner und/oder den Bedienrechner gestoppt. Alternativ kann mindestens ein Regelkreis aktiviert werden, um die Presse auf den geänderten Pulverzustand einzustellen. Als Stellgrößen dienen nach einer Ausgestaltung der Erfindung die Rotordrehzahl, Drehzahl der Fülleinrichtung, die Pulverdosierung in den Matrizen, die Presskraftänderung mittels Druckrollenverstellung usw. Diese Stellgrößen können mit Hilfe des vorhandenen Rechnersystems geändert werden. Alternativ kann auch eine manuelle Verstellung vorgenommen werden.

Mikrowellenresonatoren sind grundsätzlich bekannt. EP 0 468 023 B1 beschreibt die Messung zweier Resonanzparameter zur dichteunabhängigen Feuchtemessung. In EP 0 908 718 B1 ist ein Streufeldsensor zur Dichte- und Feuchtemessung beschreiben. Aus EP 0 889 321 B1 ist bekannt, mit derartigen Resonatoren die Feuchte und Dichte eines Stranges, zum Beispiel eines Tabakstranges, zu messen.

Mit Hilfe eines Mikrowellenresonators wird bei der Erfindung eine dichteunabhängige Feuchtemessung möglich, sowie eine feuchteunabhängige Dichtemessung. Außerdem kann das Granulat im Hinblick auf seine Korngröße analysiert werden.

Bei einer erfindungsgemäßen Rundläuferpresse nach Anspruch 6 ist ein Mikrowellenresonator mit einer Auswerteeinheit einer Zuführung für die Füllvorrichtung zugeordnet. Üblicherweise wird das Presspulver der Füllvorrichtung von einem Reservoir oberhalb der Presse über einen entsprechenden Fallkanal zugeführt. Der Mikrowellenresonator, beispielsweise einem Hohlraum- oder Streufeldresonator ist einer Bypass Zuführung außerhalb des Gehäuses der Presse zugeordnet.

Es ist bekannt, mit Hilfe von Steuerungen oder Regelungen einzelne Stellgrößen der Rundläuferpresse zu ändern. So wird etwa die Fülltiefe in den Matrizen durch die Stellung der Unterstempel in den Matrizen bestimmt. Deren Stellung wiederum wird durch eine Füllkurve bestimmt, die mit Hilfe einer Stellvorrichtung in ihrer Höhe eingestellt werden kann. Die Relativlage der Druckrollen zu den Pressstempeln kann ebenfalls mit Hilfe einer geeigneten Verstellvorrichtung geändert werden. Die von den Druckrollen erzeugte Presskraft kann gemessen werden und als Istwert einer Regelung dienen. Auch die Position der Füllkurve kann Istwert einer Regelung sein. Durch Änderung der Sollwerte in derartigen Regelungen lassen sich die einzelnen Parameter des Presslings beeinflussen. Wenn mit Hilfe des Mikrowellenresonators bestimmt wird, dass das zugeführte Pressmaterial sich in seinen Bedingungen ändert, insbesondere in seiner Feuchte, Dichte und/oder Korngröße, kann darauf mit entsprechenden Stellgrößen der Rundläuferpresse reagiert werden. Falls die gemessenen Werte im Pressmaterial zu stark von vorgegebenen Werten abweichen, kann auch ein Stopp der Rundläuferpresse veranlasst werden, um die Produktion von unzureichenden Presslingen zu verhindern.

Die Erfindung wird nachfolgend anhand von Zeichnungen näher erläutert.
- Figur 1: zeigt schematisch abgewickelt eine Rundläuferpresse.
- Figur 2: zeigt ein einfaches Blockbild.
- Figur 3: zeigt Einzelheiten zur Rundläuferpresse nach Figur 1 in einer nicht erfindungsgemäßen Ausgestaltung.
- Figur 4: zeigt den erfindungsgemäßen Bypasskanal.

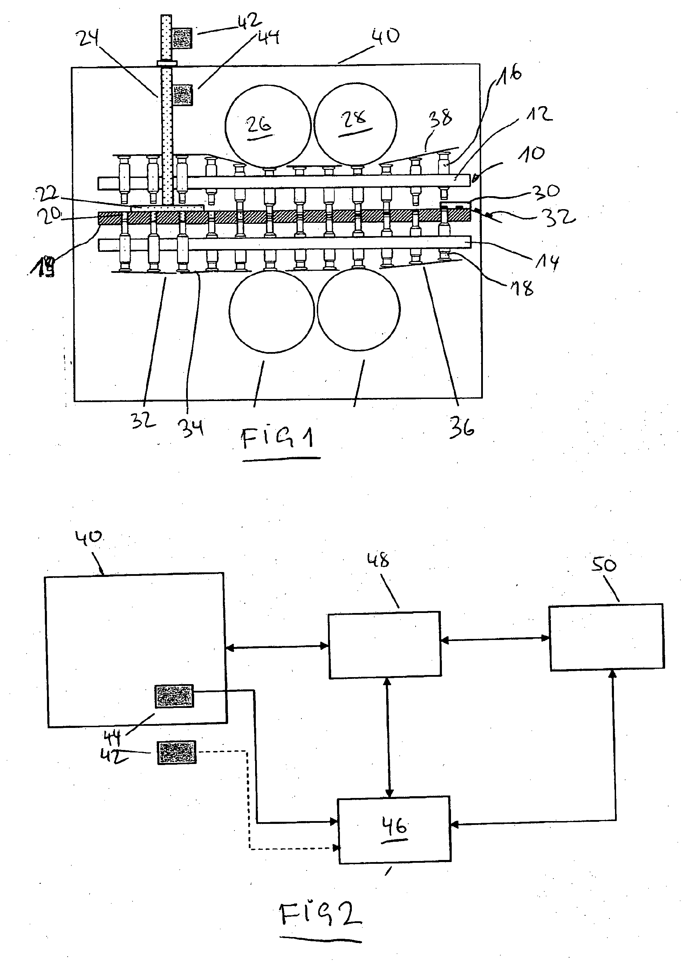

Die in Figur 1 dargestellte Rundläuferpresse weist einen Rotor 10 auf, der eine obere Führung 12 und eine untere Führung 14 für Oberstempel 16 bzw. Unterstempel 18 enthält. Dazwischen befindet sich eine Matrizenscheibe 19 mit Matrizen 20. Eine Füllvorrichtung 22 dient zur Befüllung der Matrizen 20 mit Pressmaterial. Die Füllvorrichtung 22 ist mit einem vertikalen Zuführkanal 24 verbunden, über den von einem nicht gezeigt Reservoir Pressmaterial der Füllvorrichtung 22 zugeführt wird.

Im Umfangsabstand zur Füllstation befindet sich eine Pressstation mit oberen und unteren Vordruckrollen 26 und oberen und unteren Hauptdruckrollen 28. Die Druckrollenpaare 26, 28 können durch geeignete, nicht gezeigte Verstellvorrichtungen in ihrem Abstand zur Matrizenscheibe 19 eingestellt werden.

Der Matrizenscheibe 19 ist auch ein Abstreifer 30 zugeordnet, über den Presslinge 32 abgeführt werden.

Die Pressstempel 16, 18 werden durch geeignete Führungskurven geführt. Im Bereich der Füllvorrichtung 22 ist eine untere Füllkurve 32 vorgesehen und im Anschluss daran eine Dosierkurve 34, die das von den Matrizen 20 aufgenommene Volumen bestimmt. Eine Auswerferkurve 36 bewirkt das Anheben der Unterstempel zum Auswerfen der Presslinge 32. Eine obere Führungskurve 38 hinter der Pressstation dient zum Anheben der Oberstempel 16 nach dem Verpressen. Die beschriebenen Vorkehrungen und Funktionen sind an sich bekannt.

Die beschriebenen Komponenten sind innerhalb eines Gehäuses 40 angeordnet. Der Zuführkanal 24 ist durch die obere Wand des Gehäuses 40 hindurch durchgeführt.

Man erkennt, dass am Zuführkanal 24 außerhalb des Gehäuses ein Mikrowellenresonator 42 angeordnet ist. Es handelt sich hierbei um einen so genannten Streufeldresonator, der in der Wandung des Zuführkanals 24 angeordnet ist. Mit Hilfe des Mikrowellenresonators 42 bzw. 44 wird die Dichte und/oder die Feuchtigkeit und/oder die Korngröße des Granulats des Presspulvers bestimmt.

In Figur 2 ist lediglich das Gehäuse 40 der Rundläuferpresse nach Figur 1 gezeigt. Es sind ferner die Resonatoren 42 bzw. 44 dargestellt, die mit einer Auswerteelektronik 46 verbunden sind. Diese ist mit einem Maschinenrechner 48 bzw. Bedienrechner 50 für die Tablettenpresse verbunden. Mit Hilfe des Resonators 42 bzw. 44 ist es daher möglich, Stellgrößen der Rundläuferpresse zu beeinflussen, insbesondere die Drehzahl des drehend angetriebenen Rotors, Drehzahl des Rotors in der Füllvorrichtung 22, Stellung der Dosier- bzw. Füllkurve 32, 34, Stellung der Druckrollen 26 bzw. 28. In der Auswertelektronik 46 wird der Messwert für Dichte, Feuchte und/oder Korngröße ermittelt und in einen Istwert umgewandelt, der auf eine Regelung gegeben werden kann zur Gewinnung der erwähnten Stellgrößen. Im Maschinenrechner bzw. Bedienrechners 48, 50 können die Messergebnisse auch dazu verwendet werden, statistische Größen, wie zum Beispiel Mittelwerte und/oder Standardabweichung zu berechnen und/oder anzuzeigen und/oder zu protokollieren. Werden vorgegebene Grenzbereiche des Pressmaterials überschritten, kann die Tablettenpresse auch angehalten werden.

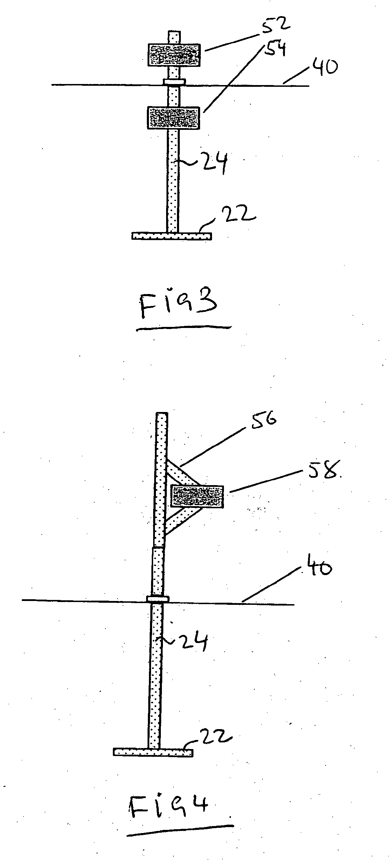

In Figur 3 ist eine Alternative zu Figur 1 dargestellt. In Figur 3 umgibt ein Hohlraumresonator 52 bzw. 54 den Zuführkanal 24 außerhalb des Gehäuses 40.

In Figur 4 ist der erfindungsgemäße Bypasskanal dargestellt. Außerhalb des Gehäuses 40 weist der Zuführkanal 24 einen Bypasskanal 56 auf, der von einem Hohlraumresonator 58 umgeben ist. Vom Hauptstrom im Zuführkanal 24 wird ein Nebenstrom im Bypasskanal 56 abgezweigt und sein Inhalt im Hinblick auf die erwähnten Größen mit dem Hohlraumresonator 58 gemessen. Das Material aus dem Nebenstrom wird wieder dem Hauptstrom im Zuführkanal 24 zugeführt.

## Patentansprüche

1. Verfahren zur Qualitätsüberwachung von pulverförmigem Pressmaterial für eine Ruridläuferpresse, bei der das Pressmaterial von einem Reservoir über einen vorzugsweise vertikalen Zuführkanal einer Füllvorrichtung zugeführt wird, die kontinuierlich Matrizen eines Rotors mit dem Pressmaterial befüllt, **dadurch gekennzeichnet, dass** dem Zuführkanal (24) ein Mikrowellenresonator (42, 44) mit einer Auswerteeinheit (46) zugeordnet wird, die die Feuchte und/oder die Dichte und/oder die Größe des Granulats des Pressmaterials misst und mindestens eine Messgröße des Mikrowellenresonators zur Änderung einer Stellgröße der Rundläuferpresse verwendet wird, wobei die Messung mit einem Mikrowellenresonator (42) in einem Bypasskanal parallel zum Zuführkanal außerhalb eines Gehäuses (40) für die Rundläuferpresse durchgeführt wird.

2. Verfahren nach Anspruch 1, **dadurch gekennzeichnet, dass** die Rundläuferpresse angehalten wird, wenn die Messgröße von einem vorgegebenen ersten Wert abweicht.

3. Verfahren nach Anspruch 1 oder 2, **dadurch gekennzeichnet, dass** die Drehzahl des Rotors und/oder die Drehzahl der Füllvorrichtung und/oder die Dosierung des Pressmaterials und/oder die Presskraft von Pressstempeln im Rotor durch Verstellung von Druckrollen verändert wird, wenn die Messgröße von einem vorgegebenen zweiten Wert abweicht.

4. Verfahren nach einem der Ansprüche 1 bis 3, **dadurch gekennzeichnet, dass** ein Hohlraumresonator (52, 54, 58) verwendet wird.

5. Verfahren nach einem der Ansprüche 1 bis 4, **dadurch gekennzeichnet, dass** ein Streufeldresonator (42, 44) verwendet wird.

6. Rundläuferpresse, mit einem Gehäuse und einem Rotor mit Matrizen und oberen und unteren Pressstempeln, Führungskurven für die Pressstempel, Druckrollen und einer Füllvorrichtung im Gehäuse und einer Zuführung für pulverförmiges Pressmaterial zur Füllvorrichtung, **dadurch gekennzeichnet, dass** einem Bypasskanal zur Zuführung (24) außerhalb des Gehäuses (40) ein Mikrowellenresonator (42, 44) mit einer Auswerteeinheit (46) zugeordnet ist.

7. Rundläuferpresse nach Anspruch 6, **dadurch gekennzeichnet, dass** der Mikrowellenresonator (42, 44) mit einem Maschinenrechner (48) und/oder einem Bedienrechner (50) der Rundläuferpresse verbunden ist.

8. Rundläuferpresse nach einem der Ansprüche 6 oder 7, **dadurch gekennzeichnet, dass** ein Hohlraumresonator (52, 54) den Bypass umgibt.

9. Rundläuferpresse nach einem der Ansprüche 6 bis 8, **dadurch gekennzeichnet, dass** eine Regelvorrichtung für die Drehzahl des Rotors und/oder die Drehzahl der Füllvorrichtung (22) und/oder eine Verstellvorrichtung für eine Dosierkurve (34) und/oder eine Verstellvorrichtung für Druckrollen (26, 28) vorgesehen ist und der Regelvorrichtung ein der Messgröße des Mikrowellenresonators proportionaler Istwert zugeführt wird.

## Claims

1. A method for quality surveillance of powdered press material for a rotary press, in which the press material is fed from a reservoir via a preferably vertical feed channel to a filling device, which continuously fills dies of a rotor with press material **characterized in that**, to the feed channel (24) and/or the filling device is assigned a microwave resonator (42, 44) with an analysis unit (46), which measures the moisture and/or the density and/or the size of the granules of the press material, and at least one press variable of the microwave resonator is used for changing a control variable of the rotary press, and **in that** the measurement is performed in the bypass channel parallel to the feed channel outside of the housing (40) for the rotary press.

2. The method according to Claim 1, **characterized in that** the rotary press is stopped if the measured variable deviates from a specified first value.

3. The method according to Claim 1 or 2, **characterized in that** the rotational speed of the rotor and/or the rotational speed of the filling device and/or the dosing of the press material and/or the pressing force of press punches in the rotor is changed by adjustment of pressure rollers, if the measured variable deviates from a specified second value.

4. The method according to one of the Claims 1 to 3, **characterized in that** a hollow space resonator (52, 54, 58) is used.

5. The method according to one of the Claims 1 to 4, **characterized in that** a stray field resonator (42, 44) is used.

6. A rotary press with a housing and a rotor with dies and upper and lower press punches, guide cams for the press punches, pressure rollers, and a filling device in the housing, and a feed for powdered press material to the filling device, **characterized in that** with a bypass channel to the feed (24) or outside the housing (40) a microwave resonator (42, 44) with an analysis unit (46) is associated.

7. A rotary press according to Claim 6, **characterized in that** the microwave resonator (42, 44) is connected to a machine computer (48) and/or a workstation (50) of the rotary press.

8. The rotary press according to one of the Claims 6 to 7, **characterized in that** the hollow space resonator (52, 54) surrounds the bypass channel.

9. The rotary press according to one of the Claims 6 to 8, **characterized in that** a control device is provided for the rotational speed of the rotor and/or the rotational speed of the filling device (22) and/or an adjustment device for a dosing cam (34) and/or an adjustment device for the pressure rollers (26, 28), and a proportional actual value of the measured variable of the microwave resonator is supplied to the control device.

## Revendications

1. Procédé de surveillance de la qualité de matériaux de compression en poudre pour une presse rotative, dans laquelle le matériau de compression est alimenté d'un réservoir à travers un canal d'alimentation de préférence vertical à un dispositif de remplissage, qui remplit des matrices d'un rotor continument avec le matériau de compression, **caractérisé en ce que** au canal d'alimentation (24) est associé un résonateur à microondes (42, 44) avec une unité d'analyse (46) qui mesure l'humidité et/ou la densité et/ou la taille du granulat du matériau de compression, et au moins une valeur de mesure du résonateur à microondes est utilisée pour changer une variable réglante de la presse rotative, le mesurage étant fait avec un résonateur à microondes (42) dans un canal de dérivation parallèle au canal d'alimentation au dehors d'un boîtier (40) pour la presses rotative.

2. Procédé selon la revendication 1, **caractérisé en ce que** la presse rotative est arrêtée quand la valeur de mesure diffère d'une première valeur donnée.

3. Procédé selon la revendication 1 ou 2, **caractérisé en ce que** la vitesse de rotation du rotor et/ou la vitesse de rotation du dispositif de remplissage et/ou le dosage du matériau de compression et/ou la force de compression de poinçons dans le rotor est changée par ajustage de rouleaux presseurs quand la valeur de mesure diffère d'une deuxième valeur donnée.

4. Procédé selon l'une quelconque des revendications 1 à 3, **caractérisé en ce que** un résonateur à cavité (52, 54, 58) est utilisé.

5. Procédé selon l'une quelconque des revendications 1 à 4, **caractérisé en ce que** un résonateur de champ de dispersion (42, 44) est utilisé.

6. Presse rotative avec un rotor avec matrices et poinçons supérieurs et inférieurs, cames de guidage pour les poinçons, rouleaux presseurs et un dispositif de remplissage dans le boîtier et un envoi pour matériau de compression en poudre au dispositif de remplissage, **caractérisé en ce que** un résonateur à microondes (42, 44) avec une unité d'analyse (46) est associé à un canal de dérivation (24) pour l'alimentation au dehors d'un boîtier (40).

7. Presse rotative selon la revendication 6, **caractérisé en ce que** le résonateur à microondes (42, 44) est relié à un ordinateur machine (48) et/ou un ordinateur d'utilisateur (50) de la presse rotative.

8. Presse rotative selon une des revendications 6 ou 7, **caractérisé en ce que** un résonateur à cavité (52, 54,) entoure la dérivation.

9. Presse rotative selon l'une quelconque des revendications 6 à 8, **caractérisé en ce que** un dispositif de réglage pour la vitesse de rotation du rotor et/ou la vitesse de rotation du dispositif de remplissage (22) et/ou un dispositif d'ajustage pour une came de dosage (34) et/ou un dispositif d'ajustage pour les rouleaux de compression (26) est pourvu et une valeur réelle proportionnelle à la valeur de mesure du résonateur à microondes est alimentée au dispositif de réglage.
